Europäisches Patentamt

European Patent Office

Office européen des brevets

(19)

(11) Veröffentlichungsnummer: **0 236 917**
**B1**

(12) **EUROPÄISCHE PATENTSCHRIFT**

(45) Veröffentlichungstag der Patentschrift: **11.07.90**

(51) Int. Cl.⁵: **G 11 B 23/037**

(21) Anmeldenummer: **87103023.5**

(22) Anmeldetag: **04.03.87**

(54) **Bandklammer für eine Bandspule mit oder ohne mindestens einen Seitenflansch und die Bandspule dafür.**

(30) Priorität: **08.03.86 DE 8606397 u**

(43) Veröffentlichungstag der Anmeldung:
**16.09.87 Patentblatt 87/38**

(45) Bekanntmachung des Hinweises auf die
Patenterteilung:
**11.07.90 Patentblatt 90/28**

(84) Benannte Vertragsstaaten:
**AT BE CH DE ES FR GB GR IT LI NL SE**

(56) Entgegenhaltungen:
**EP-A-0 136 504**
**DE-A-2 100 889**

(73) Patentinhaber: **BASF Aktiengesellschaft**
**Carl-Bosch-Strasse 38**
**D-6700 Ludwigshafen (DE)**

(72) Erfinder: **Schoettle, Klaus**
**Bergstrasse 115**
**D-6900 Heidelberg (DE)**
Erfinder: **Schmidts, Kurt**
**Kornstrasse 10**
**D-7640 Kehl (DE)**

EP 0 236 917 B1

## Beschreibung

Die Erfindung betrifft eine Bandklammer für eine Bandspule mit oder ohne mindestens einen Seitenflansch, wobei Klammer-Verriegelungselemente an der Bandklammer mit Verhakungselementen in einer Aussparung des Spulenkerns zum Halten der Klammer in der Aussparung als Halteelemente zusammenwirken und Bandschloßelemente das Bandende festlegen, wobei zumindest ein, etwa mittig in die Aussparung ragender, am Spulenkern befindlicher Vorsprung zur Abstützung der Bandklammer dient und die Bandklammer einen W-Form-Teil aufweist, der eine umgekehrte W-Form mit einem Mittelbein und zwei äußeren Beinen besitzt und mindestens eines der äußeren Beine des W-Form-Teils Rastelemente als Klammer-Verriegelungselemente aufweist, die mit wenigstens einem der Verhakungselemente der Aussparung gemeinsam die Halteelemente und Bandschloßelemente bilden und wobei der W-Form-Teil mit einem das Mittelbein und die äußeren Beine verbindenden Kreisbogen-Mittelteil ausgebildet ist, sowie einen entsprechenden Spulenkern dafür.

Derartige Bandklammern werden für band- oder streifenförmige Gegenstände, z.B. Aufzeichnungsträger benutzt, wenn diese auf Bandspulen mit wenigstens einem Flansch oder ohne Flansche, sogenannte Spulen- oder Wickelkerne, aufgewickelt werden sollen und wenigstens ein Ende des Gegenstands an der Spule oder am Wickelkern befestigt werden soll.

Eine derartige, aus der EP—A—136 504 bekannte Bandklammer von umgekehrter W-Form hat den Nachteil, daß weder eine kontrollierbare Formgebung der Bandklammer gegeben, noch ein störungsfreies Festlegen von Befestigungsbändern möglich ist.

Die DE—A—2 100 889 zeigt eine bekannte Bandklammer von U-Form ohne Mittel-abstützung und mit nach außen weisenden Verhakungselementen. Es bilden sich unvermeidbare Störstellen an den Übergängen zwischen Bandklammer und Spulenkern, und die Bandklammer kann sich im Mittelbereich leicht verformen.

Mit der DE—OS 29 01 383 ist eine Bandklammer von U-Form bekannt, deren Mittelteil sich auf einem Mittel-Fortsatz in der Kernausnehmung abstützt und dessen Beinteile ovale oder ellipsenförmige Klemmteile zum Verspannen zwischen dem Mittelteil und den Ausnehmungsendwänden aufweisen. Herstellung und Montage der Bandklammer und Herstellung der Ausnehmung sind aufwendig und für die Massenfertigung wenig geeignet.

Aus dem DE—GB 75 21 898 ist eine etwa umgekehrt W-förmige Bandklammer in einem Randausschnitt eines flanschlosen Wickelkerns bekannt, wobei das Mittelbein jedoch nicht zur Abstützung dient, da es nicht bis zum Boden des Ausschnitts reicht. Ein Mittelfortsatz ist im Ausschnitt auch nicht vorhanden. Die Außenbeine der Klammer laufen in etwa keilförmige Klemmenden aus, die mit Endnuten des Ausschnitts in Eingriff kommen. Die Formen der Bandklammer und des Ausschnitts passen am Umfangsrand nicht lückenlos zusammen, so daß sich zwei Störstellen ergeben, an denen die Randlinie unterbrochen ist, wodurch sich zwangsläufig Bandverprägungen ergeben.

Es ist aus der US—PS 3 661 345 ein flanschloser Wickelkern mit einer Randausnehmung und einer mit dem Kern untrennbar verbundenen Bandklammer bekannt, wobei die Bandklammer ein Mittelbein besitzt, das in Schließposition zwischen zwei Mittel-Fortsätzen in der Ausnehmung eingreift. Außerdem ist nur ein äußeres Befestigungsbein vorhanden. Diese Ausführung hat den großen Nachteil, daß sich die Bandklammer längen kann, so daß ein übergangsloser Verschluß des Umfangsrandes nicht mehr gewährleistet ist. Eine einmal verformte Bandklammer ist nicht ohne Nachteile ersetzbar.

Infolge von erheblichen Herstelltoleranzen der bekannten Bandklammern, gegebenenfalls in Verbindung mit Dickenschwankungen der Vorspannfolie des Magnetbands, können sich Bandverprägungen und andere Bandbeschädigungen ergeben.

Der Erfindung liegt die Aufgabe zugrunde, die bekannten Bandklammern zu verbessern, auch in Hinsicht auf einen vereinfachten Anklammerungsvorgang und einen verbesserten Spulenkern bereitzustellen.

Die Aufgabe wird gemäß dem Kennzeichen des Anspruchs 1 beziehungsweise dem Anspruch 2 gelöst.

Durch die zentrale Abstützung der Bandklammer wird vorteilhaft eine Verlängerung der Klammer in Umfangsrichtung des Spulenkerns erreichbar, so daß z.B. gegenüber den bekannten Klammerausführungen die Klammerenden verlängert werden können. Wegen der üblichen Elastizität des Bandklammermaterials wird ferner erreicht, daß sich die Enden der Klammer zwangsweise an den Kernumfang anlegen und somit Störstellen am Umfangsrand vermieden werden.

Praktisch reicht des Mittelbein der Bandklammer wenigstens bis an den Vorsprung in der Aussparung, so daß jedenfalls die Abstützung gewährleistet ist.

Es ist auch möglich, bei zwei symmetrisch angeordneten Vorsprüngen in der Aussparung, ein Mittelbein so vorzusehen, daß es zwischen die Vorsprünge ragt, wodurch sich eine zusätzliche Verrastung herstellen läßt.

Zweckmäßig sind an mindestens einem Mittelvorsprung und/oder an den Endwänden der Aussparung im Querschnitt keilförmige Hinterschneidungsnuten ausgebildet, wodurch sich zusätzliche Befestigungsmöglichkeiten für die Bandklammer ergeben.

Dadurch ergibt sich eine gute Kontrollmöglichkeit der Maßhaltigkeit der Bandklammern und eine Vermeidung von Störungen der Kreisrandkontur des Spulenkerns.

In zweckmäßiger Weiterbildung sind für Spulenkerne mit doppeltem Mittelvorsprung in der Aussparung die äußeren Klammerbeine mit nach

2

innen ragenden Rastnasen ausgebildet. Dadurch werden weitere Möglichkeiten zur sicheren Befestigung der Klammer und Festlegung des Bandes nutzbar gemacht.

In praktischer Ausführung können die Keilwinkel der Hinterschneidungen der Aussparung größer, insbesondere zwischen etwa 5° bis etwa 15° größer als die Keilwinkel der zugehörigen Rastnasen an den Klammerbeinen gewählt werden.

Damit wird eine sichere Spulenkern-Ausführung mit beschädigungslos daran zu befestigendem und darauf aufwickelndem Band, insbesondere dünnem Magnetband, bereitgestellt.

Die Erfindung wird anhand von im folgenden beschriebenen und in der Zeichnung dargestellten Ausführungsbeispielen verdeutlicht.

Es zeigen

Figur 1 einen Magnetbandkassetten-Spulenkern

Figur 2 eine erste Ausführung der Bandklammer

Figur 2a eine Einzelheit aus Figur 2

Figur 3 eine zweite Ausführung der Bandklammer

Figur 4 die Einzelheit Z der Figur 3

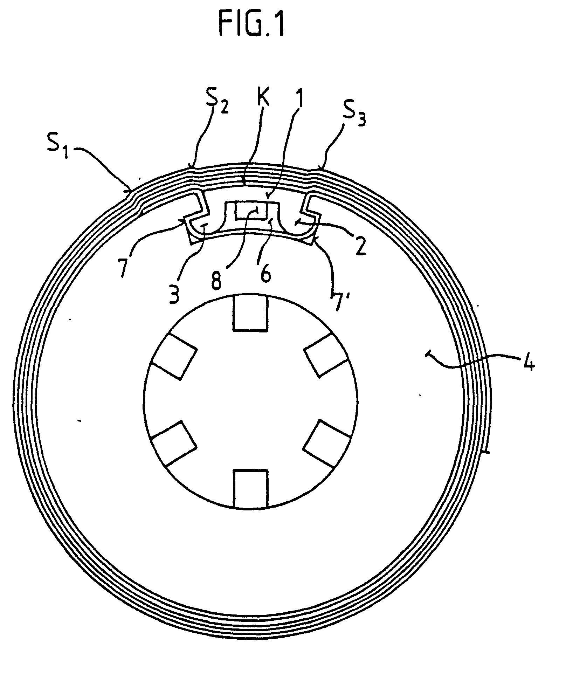

Bei Magnetbandkassettenspulen wird ein Magnetband 5 um einen Spulenkern 4 gewickelt, wobei es erforderlich ist, das Ende des Magnetbandes sicher und funktionsunschädlich am Spulenkern 4 zu befestigen. Dazu sind eine Vielzahl von verschiedenen Klammern bekannt, die häufig, wie in Figur 1 gezeigt. Omega-förmig ausgebildet und mit zwei Hakenenden 2, 3 in entsprechenden Nuten 7, 7' des Kerns 4 verhakbar sind. Meistens werden die Hakenenden 2, 3 zusammen mit dem den Umfangsausschnitt 6 des Kerns 4 schließenden Mittelteil 1 der Klammer K so ausgelegt, daß ihre tangentiale Ausdehnung zusammen mit der Bandlage etwas größer ist als der Ausschnitt 6, so daß sich die Klammer K im Ausschnitt 6 mit einer gewissen Verspannung verklemmt und das Magnetband 5 sicher hält. Mit 8 ist ein Mittelbein innerhalb der U-Öffnung der Bandklammer dargestellt, das die Stabilität der Klammer erhöhen soll. Solche Kerne 4 und Klammern K werden in großen Stückzahlen aus Kunststoff gefertigt und meist auf Automaten montiert. Dabei zeigen sich mehrere Nachteile der bekannten Bandklammerausführung K. Einmal kommen die Kerne und Klammern bei großen Produktionsmengen aus mehreren Spritzgußformen, was eine große Toleranzbreite zur Folge hat. In den Montageautomaten kommen deshalb auch unvermeidlich Teile zusammen, die toleranzmäßig nicht gut zusammenpassen, zumal auch das Magnetband bzw. das Vorspannband in seiner Dicke schwanken kann. Ist z.B. die Klammer in Bezug auf den Kernausschnitt zu klein, ist das Band nicht sicher befestigbar und kann leicht aus dem Kern herausgezogen werden. Aber auch der umgekehrte Fall einer zu großen Klammer ist ungünstig, da sich dann der Mittelteil 1 der Klammer K aufwölbt und die Zylindermantelförmigkeit der Kernumfangsfläche stört und den Rundlauf der Bandspule beeinträchtigt.

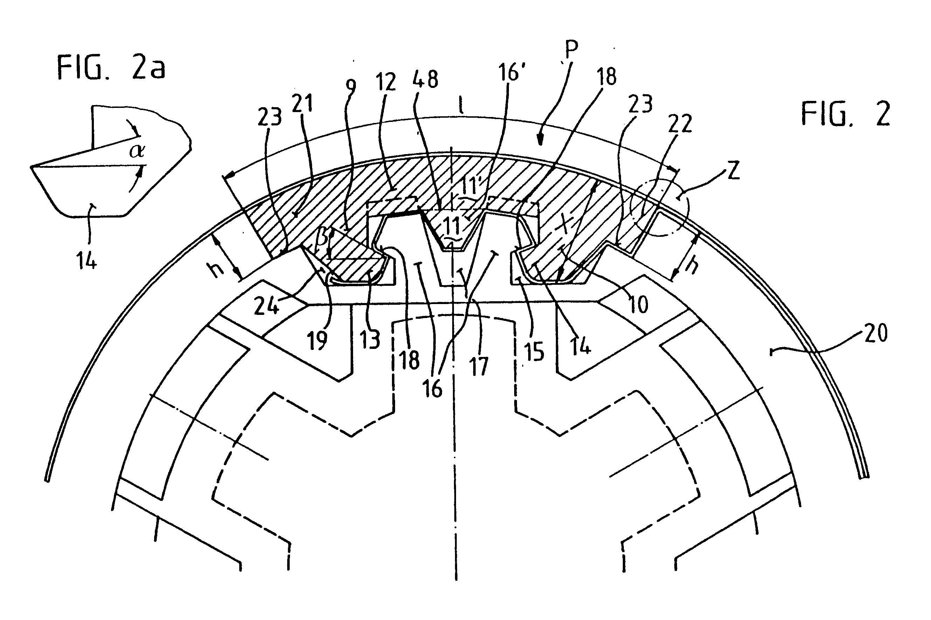

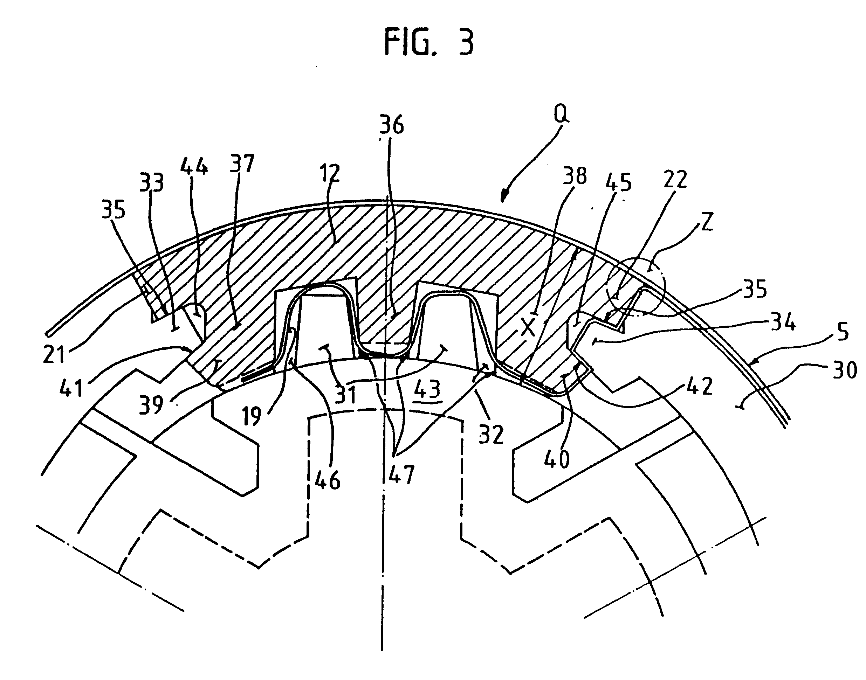

Störungen des Rundlaufs und zusätzliche Verprägungen des Magnetbandes bis weit in den Bandwickel hinein entstehen aber auch dadurch bei herkömmlichen Klammern K, daß das eingeklemmte Bandende beim Ein- und Austritt S2 bzw. S3 an dem Kernausschnitt und am Ende des freien Bandzipfels S1 eine Stufe in der Dicke des Bandes verursacht. Außerdem kommt es infolge der Toleranzen häufig vor, daß das Band in einer leichten Schräglage angeklammert wird, was dann wiederum zu einer Stufe im Wickelumfang, bzw. zum Anlaufen dieser hochstehenden Lagen am Kassettengehäuse bis zum Festlaufen des Wickels führen kann. Die erfindungsgemäßen Bandklammern sind in Fig. 2 und 3 dargestellt. Die Bandklammern P und Q bestehen im wesentlichen aus dem W-Form-Teil mit dem Kreisbogenteil 12 und Beinteilen 9 und 10 sowie dem Mittelbein 11. Beide Beine 9 und 10 sind mit Bandschloßelementen 13 und 14 ausgebildet, die im wesentlichen aus keilförmig zulaufenden Rastnasen 13 bzw. 14 bestehen.

Der Spulenkern 20 für den Gebrauch mit oder ohne Flansche besitzt am Umfang eine Aussparung 15, die in der Mitte einen Doppelvorsprung 16 mit Mittelvertiefung 17 aufweist. Die Öffnung der Mittelvertiefung 17 entspricht etwa den Abmessungen am Fuß des Mittelbeins 11 der Bandklammer P oder Q oder ist etwa größer als der Beinfuß. Der Doppelvorsprung 16 besitzt beidseitig Rastkanten 17 und 18, die bezogen auf den Boden der Aussparung 15 nach oben gerichtet, etwa in einem Winkel von $\beta = 10°$ bis $40°$, insbesondere von etwa $\beta = 25°$, verlaufen. Der Keilwinkel $\alpha$ der Rastnasen 13 und 14 soll um etwa 5° bis 15° kleiner gewählt werden als $\beta$, in Figur 2a ist ein Winkel von $\alpha \sim 15°$ dargestellt. Durch eine solche Dimensionierung wird erreicht, daß ein gegenseitiges Verkeilen von Vorsprung-Rastkanten 17 und 18 und Rastnasen 13 bzw. 14 erfolgt und das dazwischenliegende Befestigungsbandende bzw. Vorspannbandende 19 ebenfalls ausreichend verkeilt wird.

Die Beine 9 und 10 reichen in Figur 2 etwa bis zum Boden der Aussparung 15. Die Länge X der Beine muß (nach Verkeilen bzw. Zusammendrükken des Kunststoffmaterials) relativ genau die radiale Tiefe der Aussparung minus die Dicke D des Befestigungsbandendes/Vorsprungbandendes betragen.

Die Länge L der Bandklammer beträgt die Länge 1 der Randkontur der Aussparung 15 minus eine Bandstärke D

$$L = 1-D,$$

wenn das Band 5 nur an einer Seite der Klammer befestigt wird, was praktisch zweckmäßig ist, um wenigstens eine weitere Stufe zu vermeiden.

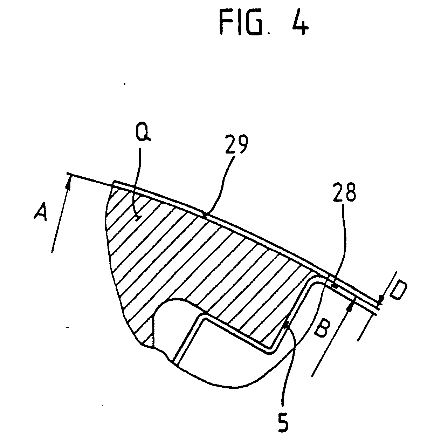

Die Bandklammern P und Q weisen Kreisbogen-Fortsätze 21, 22 auf, die die Klammer im Falle P über die Beine 9 und 10 hinaus verlängern und die wie gezeigt eine konstante Höhe h aufweisen können. Für den Fortsatz 21, 22 ist eine Stufe 23 vorgesehen, deren Radialhöhe vom Umfang gemessen ebenfalls h betragen kann, so daß darauf die Fortsätze 21, 22 aufliegen. Wenn das Befestigungs- oder Vorspannband 5 zwischen Stufe 23 und Fortsatz 22 (oder 21) festgelegt ist, liegt die Endkante des jeweiligen Fortsatzes um eine Banddicke D über dem Ende der Aussparung 15, vgl. Figur 4 hierzu und die nähere Beschreibung weiter unten. Es ist aber auch denkbar, die Fortsätze mit Kreisabschnittsform auszubilden, so daß ihre Dicke nicht mehr konstant ist, wobei die Stufe dann horizontal (also als waagrechte Sekante bezogen auf den Spulenkernumfang) angeordnet sein kann.

Es ist in Figuren 2 und 3 erkannbar, daß das Bandende 19 jeweils in einem Freiraum 24, 17 zu liegen kommt, um eine zusätzliche Störstelle am Kernumfang möglichst zu verhindern. Zu diesem Zweck sind von der Form der Bandklammer P bzw. Q und der zugehörigen Aussparung Freiräume 24, 17 von genügender Anzahl und Größe eingeplant, um eine Befestigung auch an radial verschiedenen Stellen entlang der Aussparung 15 vornehmen zu können.

In Figur 3 ist ein Spulenkern 30 mit einem beabstandeten Vorsprungpaar 31, einer Aussparung 32, Endwänden 33 und 34 und Stufen 35 dargestellt. Die zugehörige Bandklammer Q hat folgende Unterschiede zur Bandklammer P (prinzipiell gleiche Teile werden mit denselben Zahlen bezeichnet wie in Figur 2). Das Mittelbein 36 ist länger ausgeführt und reicht fast bis zum Boden der Aussparung 32. Beine 37 und 38 besitzen nach außen ragende Rastnasen 39, 40, die sich an Rastkanten 41 und 42 der Endwände 33 und 34 verkeilen. Für die Keilwinkel gilt das obengesagte. Direkt darüber befinden sich die Verlängerungs-Fortsätze 21 und 22, die auf den Stufen 35 ruhen.

Die Aussparung 32 reicht bei diesem Ausführungsbeispiel direkt bis zum äußeren Ring 43 des Spulenkerns 30, so daß sich die Klammer Q selbsttätig immer nur am äußeren Ringbereich 43 des Kerns 30 orientiert bzw. fixiert.

Die Bandklammer Q ist zwischen den Rastnasen 39, 40 mit Hinterschneidungsnuten 44 und 45 ausgebildet, worin die untere Kante, die Rastkante 41 bzw. 42 keilförmig ist und tangential zum äußeren Ring 43 hin verläuft.

In der Zeichnung in Figur 3 ist eine Momentaufnahme beim Anklammervorgang dargestellt, währenddessen sich das Ende des Befestigungsbzw. Vorspannbandes 19 von der gestrichelten Lage mehr in das Innere der Klammer zieht. In der Endlage gelangt das Endstück 19 des Bandes in den Freiraum 46 und kann dort keine Verprägungen der Bandlagen hervorrufen. Die Unterkanten der Beine 36, 37 und 38 der W-Form sind, um diesen Momentanvorgang zu verdeutlichen gestrichelt gezeichnet, es ist jedoch klar, daß in der Endlage die Beine 36—38 das Band 5 an den Ring 43 des Kerns 30 drücken sollen, was durch radiale, ausgezogene Linien 47 dargestellt ist.

Zur Dimensionierung der erfindungsgemäßen Klammerausführungen P und Q ist folgendes zu beachten. Die Höhe X der Beine 9 und 10 bzw. 37 und 38 des W-Form-Teils 8 wird dabei gleich groß bemessen und zwar genauso groß gewählt wie die Tiefe der Aussparung 15 bzw. 32 vom Umfangsrand des Kerns 10 bzw. 30 aus gemessen. Das in der Bandklammer P oder Q verankerte Band 5 legt sich zwischen die Schloßelemente, Rastnasen 14 bzw. 40 und Rastkanten 18 bzw. 42, bzw. zwischen das Bein 11 bzw. 36 und den Boden der jeweiligen Aussparung 15 bzw. 32. Das Band 5 liegt somit nur einseitig an der Klammer an und kippt dieselbe teilweise um die Bandstärke D aus der Aussparung 15 bzw. 32 heraus. Der aus der Kernaussparung 15 bzw. 32 austretende Bandabschnitt 28 liegt somit mit seiner Außenfläche genau auf dem Niveau der Umfangsfläche der Bandklammer P oder Q

Es gilt somit

$$B = A + D$$

Dabei ist

A die Höhe der Klammer P oder Q in der jeweiligen Aussparung

B die Höhe der Außenfläche des austretenden Bandabschnitts 28 über dem Aussparungsbodens

D die Dicke des Endes des Befestigungsbandes bzw. des Vorspannbandes.

Die folgende äußere Bandlage 29 findet eine stufenlose, störungsfreie Zylindermantelfläche vor, so daß für diese und alle folgenden Bandlagen eine Bandverprägung aufgrund der Bandklammer wenigstens sehr vermindert oder ausgeschlossen wird. Selbstverständlich ist zur völligen Beseitigung auch eine genaue Dimensionierung von Aussparung und Bandklammer in Umfangsrichtung notwendig.

Für obige Genauigkeitsanforderungen bei üblichen Vorspannbändern von 20 bis ca. 50 μm ist eine paßgenaue und dennoch serienmäßige Herstellung des Kerns und seiner Aussparung notwendig. Die vorgeschlagenen Bandklammerausführungen haben deshalb eine Raumform, die eine gute Überprüfbarkeit der Paßmaße an der Bandklammer und in der Aussparung gestatten.

Sowohl die Endstellen-Ausführung der Aussparungen 15 und 32 als Stufen 23 bzw. 35 (z.B. mit der Höhe h) als auch die Ausbildung der Verlangerungs-Fortsätze 21 und 22 (z.B. mit gleicher Dicke entsprechend der Hohe h) gestatten ein problemloses einfaches Nachmessen und Kontrollieren der Klammern als auch der Aussparung in den Spulenkernen, bei und nach der Fertigung. Dadurch lassen sich Probleme, die nach der Bandbefestigung auftreten können, von vornherein ausschalten. Auch wenn die Fortsätze eine Kreisabschnittsform besitzen, bei der die Dicke nicht konstant ist, ist ein Nachmessen wenigstens der Stufenabmessungen- und -abstände vorteilhaft möglich.

Das Montageverfahren läuft in einer Kassettenfertigung folgendermaßen ab:

Die Klammern werden automatisch zugeführt und mit dem zu befestigenden Bandende in die Aussparung eingedrückt. Die Bandlänge wird anschließend mittels geeigneter Spulvorrichtungen auf die Spulenkerne aufgespult, und nachfolgend werden Band und Kern in geöffnete Kassettengehäuse eingesetzt. Alle Operationen sind vollautomatisch ausführbar.

In der bisherigen Beschreibung wurde von paarweisen Vorsprungen 16 und 31 ausgegangen. Selbstverständlich ist es ohne weiteres möglich, wie mit der gestrichelten Linie 48 in Figur 2 angedeutet, die Doppelvorsprünge 16 zu einem winzigen Vorsprung zu machen, s. die Verbindungslinie der Stirnlinien zwischen den Einzelvorsprüngen 16, und folgerichtig das Mittelbein 11 zu einem Stumpf 11' zu verkürzen, der in der Mitte des dann einen Vorsprungs 16' auf diesem aufliegt.

Während es in der Funktion des Keilform-Mittelbeins 11 lag, die beiden Einzelvorsprünge 16 auseinander zu drängen, um die Verriegelungswirkung an den Rastkanten 18 und Rastnasen 13, 14 zu vergrößern, kann ein Stumpf 11' lediglich eine Druckkraft auf den einen Vorsprung 16' ausüben, wodurch eine reine Stützwirkung erhalten wird.

Aufgrund der vereinfachten und verbesserten Bandklammerausführungen konnten in der Praxis die Bandklammern und Spulenkerne wirtschaftlicher hergestellt und der Anklammervorgang vereinfacht werden. Außerdem konnte die Qualität der hergestellten Kassetten dadurch verbessert werden, daß die Zahl der durch Bandverprägungen erhaltenen Ausschuß-Kassetten erheblich reduziert werden konnte.

Der Werkstoff, z.B. Polyoximethylen o.ä., der Bandklammer soll eine Elastizität aufweisen, die in der Nähe seiner Elastizitätsgrenze liegt (d.h., wo gerade noch keine plastische Verformung eintritt), so daß sich die Maßverhältnisse besonders bezüglich der künstlich erzeugten Banddickenstufe (Fig. 4) auch nicht ändern, wenn der Wickelkern unter vollem Wickeldruck steht. Die Bandklammer sollte daher auch aus einheitlichem Werkstoff mit einheitlichem Elastizitätsmodul bestehen, um diese Maßgenauigkeit in der Größenordnung von einer Befestigungsbanddicke von zwischen ca. 20 und 50 µm sicherstellen zu können. Was Toleranzen der Aussparung und der Bandklammer anbetrifft, liegen diese in der geforderten Genauigkeit bei üblichen Herstellungsmethoden.

## Patentansprüche

1. Bandklammer für eine Bandspule (4, 20, 30) mit oder ohne mindestens einen Seitenflansch, wobei Klammer-Verriegelungselemente (2, 3, 13, 14; 39, 40) an der Bandklammer mit Verhakungselementen (7, 7'; 18; 41, 42) in einer Aussparung (6, 15, 32) des Spulenkerns zum Halten der Klammer in der Aussparung als Halteelemente zusammenwirken und Bandschloßelemente das Bandende festlegen, wobei zumindest ein, etwa mittig in die Aussparung ragender, am Spulenkern befindlicher Vorsprung (8, 16, 31) zur Abstützung der Bandklammer dient und die Bandklammer (P, Q) einen W-Form-Teil aufweist, der eine umgekehrte W-Form mit einem Mittelbein (11, 36) und zwei äußeren Beinen (9, 10; 37, 38) besitzt und mindestens eines der äußeren Beine (9, 19; 37, 38) des W-Form-Teils Rastelemente (13, 14; 39, 40) als Klammer-Verriegelungselemente aufweist, die mit wenigstens einem der Verhakungselemente (18; 41, 42) der Aussparung (15, 32) gemeinsam die Halteelemente und Bandschloßelemente bilden und wobei der W-Form-Teil mit einem das Mittelbein (11, 36) und die äußeren Beine (9, 10; 37, 38) verbindenden Kreisbogen-Mittelteil (12) ausgebildet ist, dadurch gekennzeichnet, daß der Kreisbogen-Mittelteil (12) mit über die äußeren Beine (9, 10; 37, 38) hinausragenden Kreisbogen-Fortsätzen (21, 22) von im wesentlichen konstanter Dicke (h) versehen ist.

2. Spulenkern für eine Bandklammer nach Anspruch 1, dadurch gekennzeichnet, daß die Endwände der Aussparung (15, 32) je eine Auflagestufe (35) für die Kreisbogen-Fortsätze (21, 22) der Bandklammer (P, Q) aufweisen und diese Auflagestufen (35) eine der Dicke (h) der Kreisbogen-Fortsätze (21, 22) entsprechenden Abstand zum Spulenkernumfang besitzen.

3. Bandklammer nach Anspruch 1, dadurch gekennzeichnet, daß das Mittelbein (11) des W-Form-Teils wenigstens bis an den Vorsprung (16) in der Aussparung (15) reicht.

4. Bandklammer nach Anspruch 1, dadurch gekennzeichnet, daß für zwei symmetrisch angeordnete Vorsprünge (16, 31) in der Aussparung (15 bzw. 32) des Spulenkerns das Mittelbein (11 bzw. 36) zwischen die Vorsprünge (16, 31) ragt.

5. Bandklammer nach einem der Ansprüche 1 oder 3 oder 4, dadurch gekennzeichnet, daß an mindestens einem Mittelvorsprung (16, 31) und/oder an den Endwänden (33, 34) der Aussparung (15, 32) im Querschnitt keilförmige Hinterschneidungsflächen (18, 41, 42) ausgebildet sind.

6. Bandklammer nach Anspruch 4, dadurch gekennzeichnet, daß für eine Aussparung (15) mit doppeltem Mittelvorsprung (16) die äußeren Klammerbeine (9 und 10) mit nach innen ragenden Rastnasen (13, 14) mit keilförmigem Querschnitt ausgebildet sind.

7. Bandklammer nach Anspruch 5, dadurch gekennzeichnet, daß für eine Aussparung (32) mit Hinterschneidungs-Flächen (41, 42) an den Endwänden die äußeren Klammerbeine (37, 38) mit nach außen ragenden Rastnasen (39, 40) ausgebildet sind, wobei die Rastnasen (39 bis 40) einen keilförmigen Querschnitt (Fig. 2a) besitzen.

8. Bandklammer nach einem der Ansprüche 5 bis 7, dadurch gekennzeichnet, daß die Keilwinkel (α) der Hinterschneidungsflächen der Aussparung (15, 32) größer, insbesondere um zwischen etwa 5 bis 15° größer sind als die Keilwinkel (β) der zugehörigen Rastnasen (13, 14; 39, 40) an den Klammerbeinen (9, 10; 37, 38).

9. Bandklammer nach einem der Ansprüche 1 und 3 bis 8 in Verbindung mit einem Spulenkern nach Anspruch 2 und einem Befestigungsband, dadurch gekennzeichnet, daß die Länge der äußeren Klammerbeine (9, 10; 36, 37) der Tiefe der Aussparung (15, 32) im wesentlichen gleich ist, so daß bei Festlegung des Befestigungsbandes (19) im wesentlichen mittels eines der Klammerbeine (9 oder 10, 37 oder 38) in Betriebslage der Klammer (P, Q) in der Aussparung (15, 32) das Befestigungsband (19) einseitig an der Bandklammer zwischen einem der Kreisbogen-Fortsätze (21, 22) und einer Auflagestufe (35) anliegt, wodurch die eine Oberkante der Bandklammer (P, Q) um eine Dicke (D) des Befestigungsbandes (5) über den Kreisbogenumriß des Spulenkerns (20, 30) hervorsteht (Fig. 4).

**Revendications**

1. Bride de fixation de bande pour une bobine de bande (4, 20, 30) avec au moins une joue latérale, ou sans, dans laquelle des éléments de verrouillage de bride (2, 3; 13, 14; 39, 40) sur la bride de fixation coopèrent avec des éléments d'accrochage (7, 7'; 18; 41, 42) dans un évidement (6, 15, 32) du noyau de la bobine pour le maintien de la bride dans l'évidement en tant qu'éléments de maintien et des éléments de blocage de bande immobilisent les extrémités de bande, au moins une saillie (8, 16, 31), se trouvant sur le noyau de la bobine et s'étendant sensiblement au milieu de l'évidement, servant d'appui à la bride et la bride (P, Q) comporte une partie en forme de W qui a une forme de W renversée avec une jambe médiane (11, 36) et deux jambes extérieures (9, 10; 37, 38) et au moins l'une des jambes extérieures (9, 10; 37, 38) de la partie en forme de W comporte, comme élément de verrouillage de bride, des éléments de crantage (13, 14; 39, 40) qui forment ensemble avec au moins l'un des éléments d'accrochage (18; 41, 42) de l'évidement (15, 32) les éléments de maintien et les éléments de blocage de bande, et la partie en forme de W comporte une partie médiane (12) en arc de cercle reliant la jambe médiane (11, 36) et les jambes extérieures (9, 10; 37, 38), caractérisée par le fait que la partie médiane en arc de cercle (12) est pourvue de prolongements (21, 22) en arc de cercle en saillie hors des jambes extérieures (9, 10; 37, 38) et d'épaisseur sensiblement constante.

2. Noyau de bobine pour une bride de fixation selon la revendication 1, caractérisé par le fait que les parois d'extrémité de l'évidement (15, 32) comportent, chacune, un épaulement d'appui (35) pour les prolongements (21, 22) en arc de cercle de la bride de fixation (P, Q) et ces épaulements d'appui (35) sont à une distance de la périphérie du noyau de bobine correspondant à l'épaisseur (h) des prolongements (21, 22) en arc de cercle.

3. Bride de fixation de bande selon la revendication 1, caractérisée par le fait que la jambe médiane (11) de la partie en forme de W s'étend dans l'évidement (15) au moins jusqu'à la saillie (16).

4. Bride de fixation de bande selon la revendication 1, caractérisée par le fait que, pour deux saillies (16, 31) disposées symétriquement dans l'évidement (15, 32) du noyau de bobine, la jambe médiane (11, 36) s'étend entre les saillies (16, 31).

5. Bride de fixation de bande selon l'une des revendications 1 ou 3 ou 4, caractérisée par le fait que des surfaces de dépouille (18, 41, 42) à section en forme de coin sont formées au moins sur une saillie médiane (16, 31) et/ou sur les parois d'extrémité (33, 34) de l'évidement (15, 32).

6. Bride de fixation de bande selon la revendication 4, caractérisée par le fait que, pour un évidement (15) à double saillie médiane (16), les jambes de bride extérieures (9, 10) sont formées avec des talons de crantage (13, 14) s'étendant vers l'extérieur.

7. Bride de fixation de bande selon la revendication 5, caractérisée par le fait que, pour un évidement (32) avec des surfaces de dépouille (41, 42) sur les parois d'extrémité, les jambes de bride extérieures (37, 38) sont formées avec des talons de crantage (39, 40) s'étendant vers l'extérieur, les talons de crantage (39, 40) ayant une section en forme de coin (fig. 2a).

8. Bride de fixation de bande selon l'une des revendications 5 à 7, caractérisée par le fait que les angles de coin ($\alpha$) des surfaces de dépouille de l'évidement (15, 32) sont plus grands, en particulier de 5 à 10° environ, que les angles de coin ($\beta$) des talons de crantage associés (13, 14; 39, 40) sur les jambes de bride (9, 10; 37, 38).

9. Bride de fixation de bande selon l'une des revendications 1 et 3 à 8 en combinaison avec un noyau de bobine selon la revendication 2 et une bande de fixation, caractérisée par le fait que la longueur des jambes de bride extérieures (9, 10; 37, 38) est sensiblement égale à la profondeur de l'évidement (15, 32), de sorte que, en immobilisant la bande de fixation (19) essentiellement à l'aide de l'une des jambes de bride (9 ou 10, 37 ou 38) en position d'utilisation de la bride (P, Q) dans l'évidement (15, 32), la bande de fixation (19) s'étend d'un côté contre la bride entre l'un des prolongements (21, 22) en arc de cercle et un épaulement d'appui (35), grâce à quoi le bord supérieur de la bride de fixation (P, Q) fait saillie hors du contour en arc de cercle du noyau de la bobine (20, 30) d'une épaisseur (D) de la bande de fixation (5).

**Claims**

1. A tape clamp for a tape reel (4, 20, 30) with or without one or more flanges, clamp locking elements (2, 3, 13, 14, 39, 40) on the tape clamp interacting, as holding elements, with hook elements (7, 7', 18, 41, 42) in a recess (6, 15, 32) in the hub in order to hold the clamp in the recess, and tape locking elements fixing the tape end, and one or more projections (8, 16, 31), which are located on the hub and project roughly into the middle of the recess, serving to support the tape clamp, and the tape clamp (P, Q) possessing a W shaped part which has an inverted W shape with a middle leg (11, 36) and two outer legs (9, 10, 37, 38), and one or more of the outer legs (9, 10, 37, 38) of the W-shaped part possesses locking elements (13, 14, 39, 40) as clamp locking elements which, together with one or more of the hook elements (18, 41, 42) of the recess (15, 32), form the holding elements and tape locking elements, and the W-shaped part being provided with an arc-shaped middle section (12) connecting the middle leg (11, 36) and the outer legs (9, 10, 37, 38), wherein the arc-shaped middle section (12) is provided with arc-shaped extensions (21, 22) which project beyond the outer legs (9, 10, 37, 38) and are essentially of constant thickness (h).

2. A hub for a tape clamp as claimed in claim 1, wherein the end walls of the recess (15, 32) each have a supporting step (35) for the arc-shaped extensions (21, 22) of the tape clamp (P, Q) and these supporting steps (35) are at a distance from the hub periphery corresponding to the thickness (h) of the arc-shaped extensions (21, 22).

3. A tape clamp as claimed in claim 1, wherein the middle leg (11, 11') of the W-shaped part extends at least as far as the projection (16) in the recess (15).

4. A tape clamp as claimed in claim 1, wherein the middle leg (11 or 36) projects between the projections (16, 31) for two symmetrically arranged projections (16, 31) in the recess (15 or 32) of the hub.

5. A tape clamp as claimed in any of claims 1 or 3 or 4, wherein undercut surfaces (18, 41, 42) having a wedge-shaped cross-section are provided in one or more middle projections (16, 31) and/or in the end walls (33, 34) of the recess (15, 32).

6. A tape clamp as claimed in claim 4, wherein the outer clamp legs (9 and 10) are provided with locking lugs (13, 14) having a wedge-shaped cross-section which project inward for a recess (15) with a double middle projection (16).

7. A tape clamp as claimed in claim 5, wherein the outer clamp legs (37, 38) are provided with locking lugs (39, 40) which project outward for a recess (32) with undercut surfaces (41, 42) in the end walls, the locking lugs (39 to 40) possessing a wedge-shaped cross-section (Fig. 2a).

8. A tape clamp as claimed in any one of claims 5 to 7, wherein the wedge angles (α) of the undercut surfaces of the recess (15, 32) are larger, in particular about 5—15° larger, than the edge angles (β) of the associated locking lugs (13, 14, 39, 40) on the clamp legs (9, 10, 37, 38).

9. A tape clamp as claimed in any of claims 1 and 3 to 8 in conjunction with a hub as claimed in claim 2 and a fastening tape, wherein the length of the outer clamp legs (9, 10, 36, 37) is essentially equal to the depth of the recess (15, 32), so that, when the fastening tape (19) is fixed essentially by one of the clamp legs (9 or 10, 37 or 38) in the operating position of the clamp (P, Q) in the recess (15, 32), the fastening tape (19) bears on one side against the tape clamp of a point between one of the arc-shaped extensions (21, 22) and a supporting step (35), as a result of which one upper edge of the tape clamp (P, Q) projects above the arc-shaped contour of the hub (20, 30) by a thickness (D) of the fastening tape (5) (Fig. 4).

# FIG.1

FIG. 2

FIG. 2a

FIG. 3

# FIG. 4